(19) Europäisches Patentamt
European Patent Office
Office européen des brevets

(11) **EP 2 776 708 B1**

(12) **EUROPEAN PATENT SPECIFICATION**

(45) Date of publication and mention
of the grant of the patent:
**29.06.2016 Bulletin 2016/26**

(21) Application number: **12786942.8**

(22) Date of filing: **07.11.2012**

(51) Int Cl.:
**F03B 15/16** *(2006.01)*

(86) International application number:
**PCT/EP2012/072045**

(87) International publication number:
**WO 2013/068411 (16.05.2013 Gazette 2013/20)**

(54) **CONTROL OF WATER CURRENT TURBINES**

REGELUNG VON WASSERTURBINEN

RÉGULATION DES TURBINES HYDRAULIQUES

(84) Designated Contracting States:
**AL AT BE BG CH CY CZ DE DK EE ES FI FR GR HR HU IE IS IT LI LT LU LV MC MK MT NL NO PL PT RO RS SE SI SK SM TR**

(30) Priority: **10.11.2011 GB 201119399**

(43) Date of publication of application:
**17.09.2014 Bulletin 2014/38**

(73) Proprietor: **Tidal Generation Limited
Stafford, ST17 4LX (GB)**

(72) Inventors:
• **VIGARS, Paul
Bristol BS1 4PB (GB)**

• **WINTER, Alexei Ivan
Bristol BS1 4PB (GB)**

(74) Representative: **Vigars, Christopher Ian
Astrum ElementOne Limited
Tower House
Fairfax Street
Bristol BS1 3BN (GB)**

(56) References cited:
**EP-A1- 0 141 372       EP-A2- 0 739 087
DE-B3-102008 053 732   US-A1- 2002 014 773**

## Description

The present invention relates to the control of water current turbines.

## BACKGROUND OF THE INVENTION

It is widely known that easily accessible resources of fossil fuels are declining. In addition, the impact of the use of fossil fuels upon the environment has become increasingly apparent. As a result of this, it has become imperative that viable alternative energy sources are used as effectively and efficiently as possible. The use of turbines to capture the power of water flow, such as tidal, river and ocean current flows is becoming a viable source of alternative energy. The turbine equipment used to capture such water flow energy typically includes a shaft driven generator connected using a drivetrain to a rotor assembly. The drivetrain may include a gearbox. The rotor assembly includes a plurality of rotor blades that are driven by the water flow, so as to turn an input shaft of the drivetrain. The rotor blades may be coupled directly to the input shaft, or may be attached via a hub or similar.

Water current turbine rotor blades generate high thrust loadings on the turbine assembly and drivetrain components. In order to remain economically viable, it is desirable to limit such loadings, so that the components are kept within acceptable limits of size, weight and cost. Water current turbines typically have a "rated power" for which the components of the turbine are designed. In a typical installation, the water current flow rate can be expected to reach a level above which an uncontrolled turbine would operate at a higher generating level than the rated power level. Operating at such a high level results in loads on the turbine equipment which are greater than the loads for which the equipment is rated. It is, therefore, necessary to limit the level at which the turbine operates.

One previously-considered control scheme provides a resistive force on a shaft of the drivetrain, in order to control the rotational speed of the drivetrain. Such a scheme, however, is merely a technique to overcome the high input power provided by the rotor assembly. Accordingly, another previously-considered technique is to provide variable pitch rotor blades that can be controlled to reduce the amount of power developed by the rotor assembly, and hence delivered to the drivetrain. The variation of blade pitch angle in such systems reduces the power coefficient of the rotor assembly, which results in lower power generation for a given flow speed. However, variable pitch blade systems are complex, expensive and open to failure.

Another previously-considered control scheme, such as described in US Patent Application 2010/0109325, uses a closed loop control system which operates according to well-known set point tracking techniques, using a calculated power level in order to limit the rotor speed to an acceptable level. However, such a system is complex, as it requires the use of a predefined mathematical model of the turbine in combination with a system for providing incremental adaptation of the working point of the generator based on that model, in order to provide a power optimal state of the apparatus. Another method of controlling a water turbine is known from EP-A2-0 739 087. It is, therefore, desirable to provide a control system and method that enables simple, but effective, control of a water current turbine.

## SUMMARY OF THE INVENTION

According to a first aspect of the present invention, there is provided a method of controlling a water current turbine which includes a rotor assembly arranged to drive a generator, the method comprising determining loading conditions for the water current turbine over a range of generator rotational speed and torque combinations, receiving a power signal indicative of a desired generator output power level, determining an acceptable range of output power levels with respect to the desired generator output level, the acceptable range of output power levels being defined by a desired power quality measure, receiving a speed signal indicative of a rotational speed of the generator, producing a generator torque control signal in dependence upon the speed signal, the acceptable range of output power levels, and the determined loading conditions of the water current turbine, and supplying the generator torque control signal to the generator, wherein the generator torque signal causes the generator to operate at a rotational speed which produces a generator output power level within the acceptable range of output power levels, and which produces a desired water current turbine loading condition.

In one example, the generator torque level indicated by the torque control signal is determined according to the equation $Q=P/\omega$, where Q is the required generator torque, P is a desired generator output power level within the acceptable range of power levels, and w is the rotational speed of the generator.

In one example, producing the generator torque control signal comprises determining an acceptable range of generator torque levels for the rotational speed of the generator indicated by the speed signal, the acceptable range of torque levels resulting in a generator output power level within the acceptable range of output power levels at the speed concerned, and determining a desired torque level within the acceptable range of torque levels, in dependence upon the determined load conditions for the rotational speed concerned, producing a generator torque control signal relating to the desired torque level.

In one example, the generator torque control signal serves to cause the generator to operate at a rotational speed outside of a predetermined range of rotational speeds.

In one example, the desired water current turbine loading condition is a minimum loading condition at the rotational speed concerned.

In one example, the torque control signal remains substantially constant as rotational speed of the generator changes until the power output level of the generator is within a predetermined amount of the upper or lower output power levels of the acceptable range of output power levels.

According to a second aspect of the present invention, there is provided a controller for a water current turbine which includes a rotor assembly arranged to drive a generator, the controller comprising a control processor operable to store loading data indicative of predetermined loading conditions for the water current turbine over a range of generator rotational speed and torque combinations, to store power range data indicative of a predetermined acceptable range of output power levels with respect to a desired generator output level, the acceptable range of output power levels being defined by a desired power quality measure, to receive a power signal indicative of a desired generator output power level, to receive a speed signal indicative of a rotational speed of the generator of the turbine, to produce a generator torque control signal in dependence upon such a received speed signal, such a predetermined acceptable range of output power levels indicated by such stored power range data, and such predetermined loading conditions of the water current turbine indicated by such stored loading data, and to supply such a generator torque control signal to a generator, wherein the generator torque signal serves to cause the generator to operate at a rotational speed which produces a generator output power level within the acceptable range of output power levels, and which produces a desired water current turbine loading condition.

In one example, the generator torque level indicated by the torque control signal is determined according to the equation $Q=P/\omega$, where Q is the required generator torque, P is a desired generator output power level within the acceptable range of power levels, and $\omega$ is the rotational speed of the generator.

In one example, the controller is operable to store torque range data indicative of a predetermined acceptable range of generator torque levels for the rotational speed of the generator indicated by the speed signal, the acceptable range of torque levels resulting in a generator output power level within the acceptable range of output power levels at the speed concerned, to determine a desired torque level within the acceptable range of torque levels indicated by such stored torque range data, in dependence upon predetermined load conditions indicated by the stored loading data for the rotational speed concerned, and to produce a generator torque control signal relating to the desired torque level.

In one example, the generator torque control signal serves to cause the generator to operate at a rotational speed outside of a predetermined range of rotational speeds.

In one example, the desired water current turbine loading condition is a minimum loading condition at the rotational speed concerned.

In one example, the controller is operable to maintain the torque control signal at a substantially constant level as rotational speed of the generator changes until the power output level of the generator is within a predetermined amount of the upper or lower output power levels of the acceptable range of output power levels.

According to another aspect of the present invention, there is provided a water current turbine including a generator, a rotor assembly arranged to drive the generator, and a controller as according to the second aspect of the present invention, the controller being operable to control the generator.

## BRIEF DESCRIPTION OF THE DRAWINGS

Figure 1 is a schematic block diagram of a water current turbine embodying one aspect of the present invention;

Figure 2 is a schematic block diagram of a control unit of the water current turbine of Figure 1;

Figure 3 is a flow chart illustrating steps in a method embodying another aspect of the present invention;

Figure 4 illustrates an example operating characteristic of a system embodying the present invention; and

Figure 5 to 7 illustrate respective possible operating modes of a system embodying the present invention.

## DETAILED DESCRIPTION OF THE PREFERRED EMBODIMENT

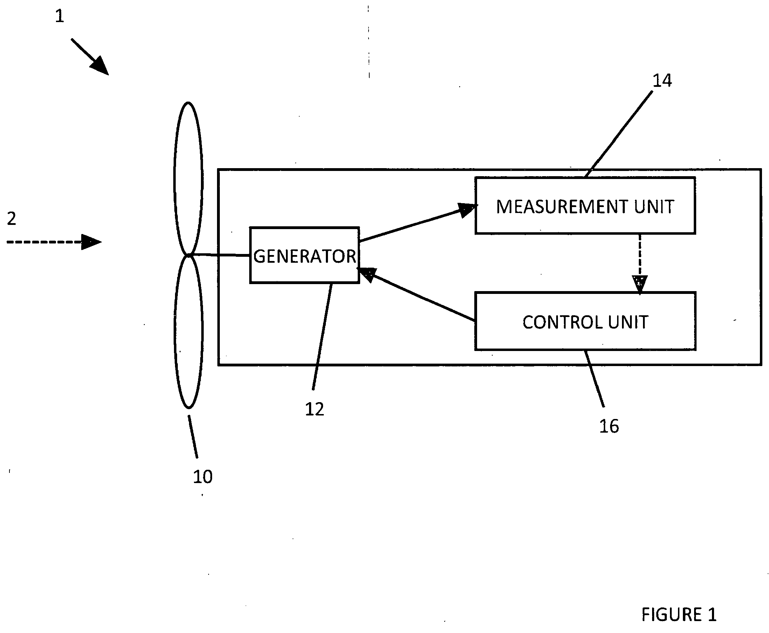

An exemplary water current turbine 1 embodying one aspect of the present invention is shown in Figure 1, and includes rotor assembly 10 which is arranged to be rotated by a water current flow 2. The rotor assembly 10 is arranged to transfer this rotational motion to a generator 12, via a drivetrain (not shown for the sake of clarity) which may include a gearbox and other components. As is well known and understood, the generator 12 generates electrical power from the rotational motion provided by the drivetrain. The generator 12 includes generator control circuitry that operates to control the operation of the generator 12.

The turbine 1 of Figure 1 also includes a measurement unit 14 and a control unit 16. The measurement unit 14 operates to measure the rotational speed, $\omega$, of the generator 12, and supplies generator speed information to the control unit 16. The control unit 16 makes use of the speed information provided by the measurement unit 14 to provide control instructions to the control circuitry of the generator 12, as will be described below.

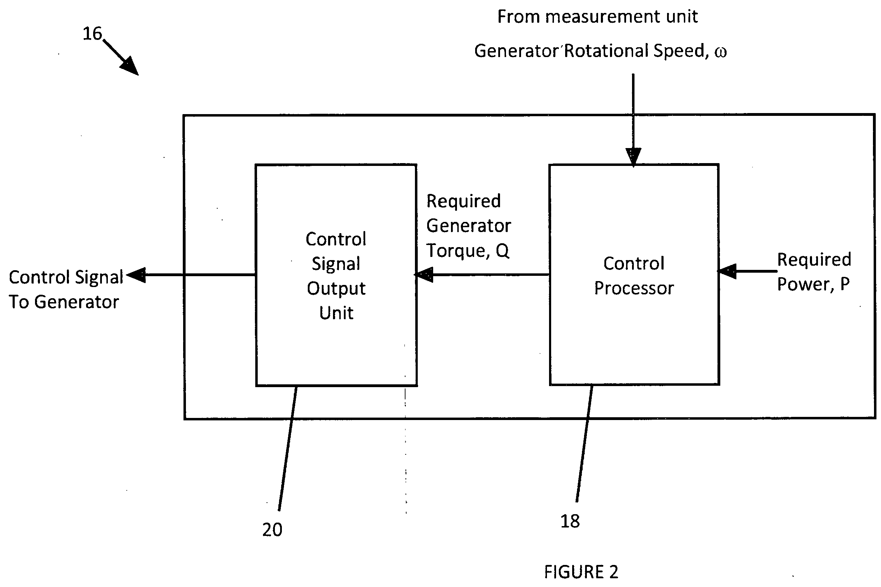

The control unit 16 is shown in more detail in Figure 2, and includes a control processor 18 and a control signal output unit 20. The control processor 18 receives generator speed information from the measurement unit 14, and uses this information in combination with required power information P to produce a required generator torque signal Q. The required power information P may be provided by an external source, such as an array controller, or may be provided internally by the control processor 18, for example in a look up table or other suitable storage device.

The required generator torque value Q is passed to the control signal output unit 20 which converts the required torque value into control signals for the generator 12. These control signals cause the control circuitry of the generator 12 to adjust electrical parameters of the generator, such that the generator torque reaches the required value Q.

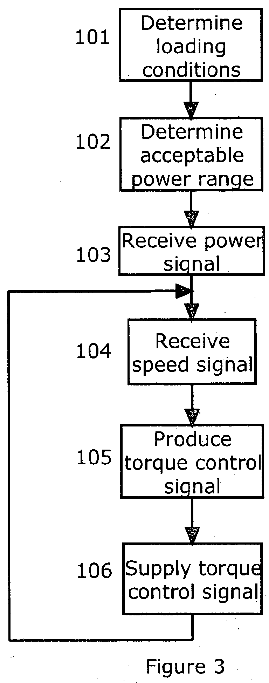

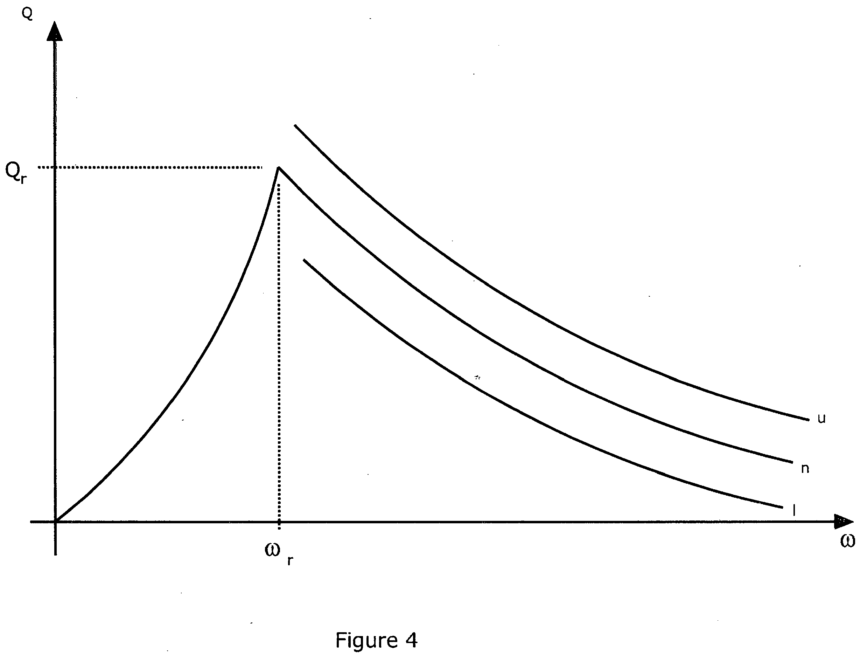

Operation of the control unit 16 will now be described with reference to the block diagram of Figure 2, the flowchart of Figure 3, and the graph showing operational characteristics of the systems of Figure 4.

Usually in advance of the operation of the water current turbine, loading characteristics of the turbine are determined (step 101). For example, respective axial and transverse loadings at a series of rotational speed and torque combinations are determined, by calculation or by measurement, and are stored by the control processor for use in the control of the turbine.

Also in advance of the operation of the turbine, an acceptable range of generator output power is determined when the turbine is running at the rated power level. This range of power levels is determined by the required power quality of the output power. Power quality is a measure of the variance of the actual output power from the desired value. For example, there may be a requirement that the output power from the generator must not vary by more than 5% from the rated power output value. The acceptable power range is then stored by the control processor 18 for use in control of the turbine. From the acceptable range of power level it is possible to derive, for any given rotational speed of the generator, a range of acceptable torque values, such that the output power conditions are met.

The control processor receives a desired power signal (step 103) from the array control system (not shown for clarity). For example the array control system may require that the turbine output a maximum power level, or may require a lower level dependent upon consumer demands. The turbine control processor uses this desired power level as the input to the control system employed to control the torque, and hence power output, of the generator 12.

When the water current flow speed is such that the maximum power that can be generated by the turbine is less than the rated power level of the turbine, the control unit 16 operates to maximise the power output of the generator by calculating the appropriate value of required generator torque.

When the water current flow speed is above that required by the turbine to produce the rated power level, the control processor 18 operates to control the generator 12, via the control circuitry of the generator 12, to produce a desired power output level.

The control processor 18 receives (step 104) generator speed information from the measurement unit 14, and calculates (step 105) the required generator torque value Q. This required generator torque value is passed to the control signal output unit 20 which converts the torque value Q into control signals for the control circuitry of the generator 12, and then outputs (step 106) the control signals to the control circuitry of the generator 12. The control processor then repeats the control of the generator, using further received speed indicator signals.

In accordance with the principles of the present invention, a rotor assembly that uses fixed pitch blades (or that has variable pitch blades that are not to be pitch controlled) is controlled so as to maintain a desired level of power output with the required power quality level, simply by controlling the electrical torque of the generator in dependence upon the measured rotational speed of the generator and the desired output power level. Such control is robust and does not require complex calculation and computations, and can, therefore, react quickly to changing conditions experienced by the turbine. The geometry of suitable fixed pitch blades, primarily the chord length and twist angle, is designed so that the blade has favourable thrust and power coefficient characteristics as the rotational speed of the rotor assembly changes. In one example, a maximum thrust coefficient is reached approximately when the power coefficient is reached, and then decreases as the rotational speed increases. One possible suitable blade is described in International (PCT) patent application number PCT/GB2010/052156, published under number WO/2011/077128.

In a steady state flow speed, the rotor torque (the torque imparted by the rotor on the drivetrain, which is directly related to the hydrodynamic torque imparted on the rotor by the water current flow) is constant and balances the generator torque, such that constant rotational speed and power output is achieved. The power output ($P_e$) of the generator is a function of generator torque (Q) and rotational speed (w):

$$P_e = Q.\omega$$

As the flow speed (U) experienced by the rotor assembly increases, the hydrodynamic torque imparted on the rotor assembly increases, and therefore exceeds the generator torque (Q). Such a torque imbalance results in acceleration of the rotor assembly and drivetrain.

In a method embodying the present invention, only the generator torque Q is controlled. This control is made in dependence upon the detected rotational speed of the generator, and the required power output, and on the desired loading conditions. For example, it may be desirable to maintain the same level of generator torque if that torque level results in lower, or minimal, axial loading on the turbine.

As described above, in accordance with the principles of the present invention, the output power of the generator is able to vary within limits determined by the power quality requirements. Such a situation is illustrated in Figure 4, which is a graph plotting generator torque (Q) against generator rotational speed ($\omega$), and shows the torque/speed characteristics of the generator for a constant output power. Below a rated speed $\omega_r$ the generator is controlled so as to maximise its power output. At rotational speeds above $\omega_r$, the generator torque is controlled to produce a desired power level based on the generator speed. The torque curve indicated by "n" in Figure 4 represents a constant power output at the desired power level.

The torque curve indicated by "I" represents that required for a power level at a lower limit defined by the power quality requirement, and the curve "u" represents the power output upper limit. The power values that give the range of the lower and upper limits could be set as an absolute level of power, or could be set as a proportion of a nominal output value.

The chosen torque level of the generator is between the upper and lower torque curves shown in Figure 4, such that the output power level is between the predetermined values provided by the desired power quality requirements.

Since the generator torque is able to be set at any desired point between the upper and lower limits whilst maintaining the output power within the acceptable output range, it is possible to arrange a control system that chooses the desired generator torque on the basis of parameters other than simply the rotational speed and required output power, as described briefly above.

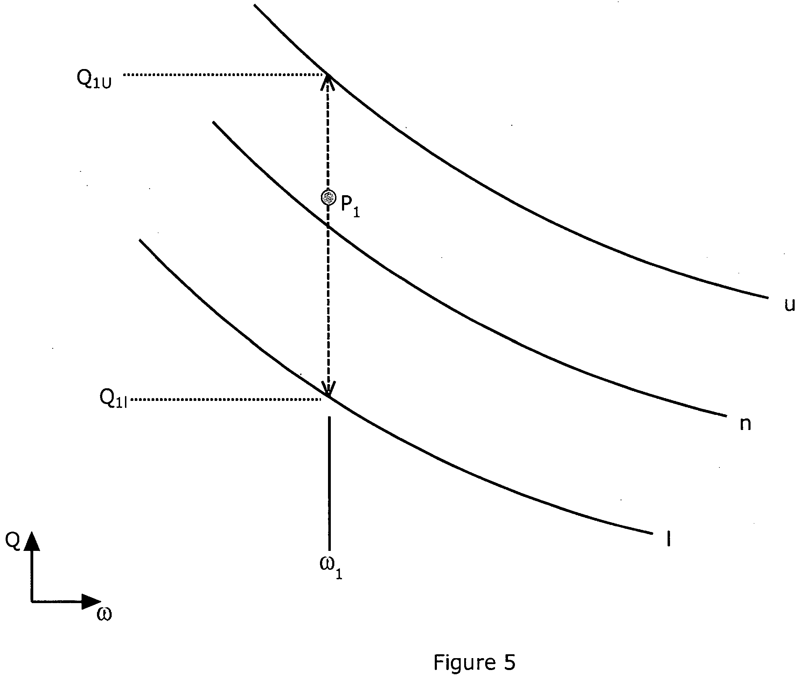

Figure 5 shows part of the graph of Figure 4 in more detail, and illustrates the range of torque values $Q_{1l}$ to $Q_{1u}$ at which a generator rotating at a speed $\omega_1$ achieves the required output power level. One parameter which can drive the choice of generator torque is the loading on the turbine structure by the rotor assembly. For example, the characteristics of the rotor assembly may make it desirable to increase or decrease the generator torque at a given rotational speed of the generator, in order to decrease the structural (e.g. axial and/or transverse) loading caused by rotation of the rotor assembly.

Having a choice of torque values also enables different control schemes to be adopted as the rotational speed of the generator changes, for example due to different flow conditions experienced by the rotor assembly, or due to varying electrical loading.

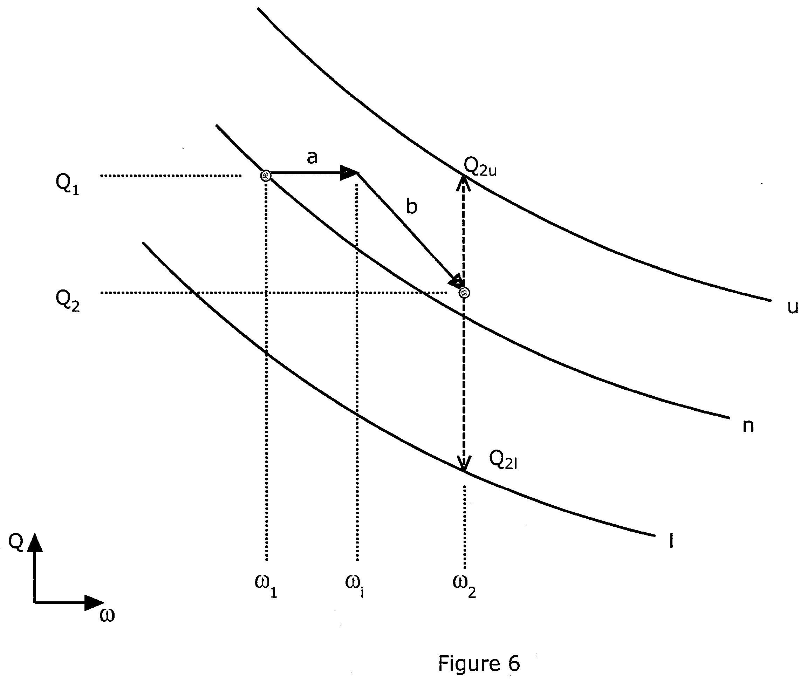

Figure 6 illustrates control of the generator torque level Q as the rotational speed increases from a first speed $\omega_1$ to a second speed $\omega_2$. Such an increase will occur, for example, when the rotor assembly experiences a hydrodynamic torque from the water flow that exceeds the generator torque. In one example control scheme, the generator torque is held at a constant level (during period a) as the rotational speed increases, since the torque curve remains within the permitted range, and the loading conditions of the turbine are also known to be acceptable. When the rotational speed reaches an intermediate level ($\omega_i$) the generator torque may be reduced to a desired level ($Q_2$) in order, for example, to reduce the structural loading on the machine at the higher rotational speed. This reduction in generator torque level will result in an increase in the rotational speed of the generator, since the input hydrodynamic torque will exceed the generator torque and the imbalance will cause the drivetrain to accelerate. The drivetrain then reaches a point of equilibrium, indicated by the point ($\omega_2$, $Q_2$) with an output power within the desired range, and the loading conditions of the turbine being at a desirable level.

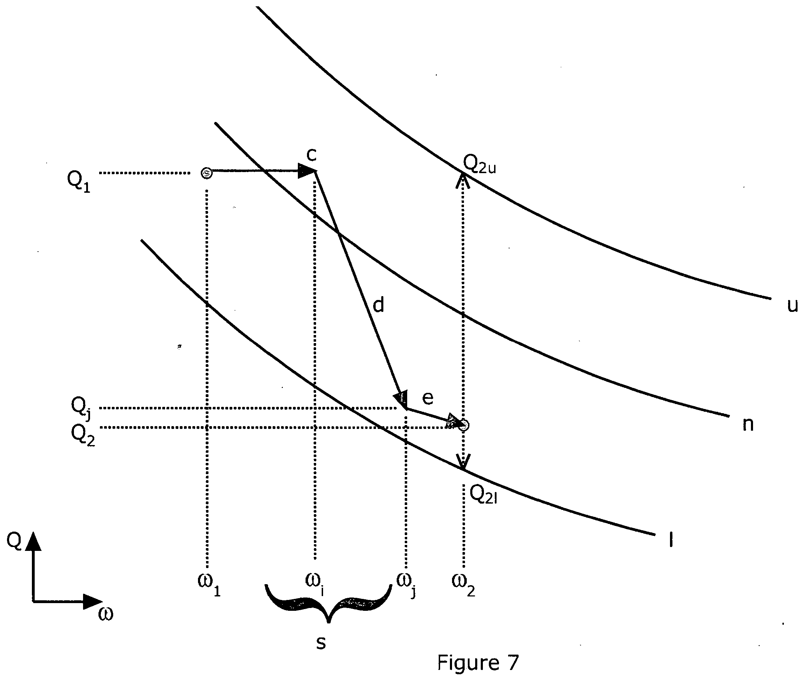

Another control scheme in accordance with the principles of the present invention is illustrated in Figure 7. The generator initially operates at a first speed and torque point ($\omega_1$, $Q_1$). When the hydrodynamic torque experienced by the rotor assembly increases, the rotational speed of the generator increases to an intermediate level, $\omega_i$, during a first period, c.

In this example, the intermediate rotational speed $\omega_i$ lies within an undesirable speed range, S. Such a range may be defined because of some characteristics of the assembly which make it desirable to avoid the speed range for general operating of the assembly. For example, unwelcome resonance characteristics of the assembly may be experienced in the speed range.

In order to move out of the undesirable speed range S, the generator torque Q is dropped to an intermediate level $Q_i$ in order to allow the rotor, and hence the generator, to accelerate out of the undesirable speed range S during a second period, d. The intermediate torque value $Q_i$ is chosen so that the operating point of the generator remains within the upper and lower torque curves, so that the output power of the generator remains within the desired power range. Once the rotational speed of the generator reached a point, $\omega_j$, outside of the undesirable speed range, the generator torque Q can be adjusted further to place the rotor assembly at an operating point that reduces the structural loading to a desired level. The assembly is then able to settle (in the absence of further input variations) at a new operating point ($\omega_2$, $Q_2$) within the defined torque range ($Q_{2l}$, $Q_{2u}$) for the new rotational speed $\omega_2$.

The loading characteristics are typically determined in advance of the operation of the water current turbine. For example, the loading characteristics may be modelled, or may be measured on a test or prototype turbine. The control processor of a deployed turbine is provided with data indicative of the loading characteristics, for use in controlling the operation of the generator using the generator torque control technique described herein.

Furthermore, since the nominal or rated power output of the turbine is known in advance, the acceptable range of output power levels can be calculated and data relating to such an acceptable range can be supplied to the control processor in advance of operation. The control processor is also provided with data indicative of the acceptable range of torque values which corresponds to the acceptable range of output power levels.

The data can be stored in a data storage device within, or external to, the control processor, and may be in the form of a look up table or other suitable format. The control processor may undertake some additional processing, such as value interpolation, before the generator torque control signal is output to the generator control circuitry.

**Claims**

1. A method of controlling a water current turbine which includes a rotor assembly arranged to drive a generator, the method comprising:

   determining loading characteristics for the water current turbine over a range of generator rotational speed and torque combinations;
   receiving a power signal indicative of a desired generator output power level;
   determining an acceptable range of output power levels with respect to the desired generator output level, the acceptable range of output power levels being defined by a desired power quality measure;
   receiving a speed signal indicative of a rotational speed of the generator;
   producing a generator torque control signal in dependence upon the speed signal, the acceptable range of output power levels, and the determined loading characteristics of the water current turbine; and
   supplying the generator torque control signal to the generator,
   wherein the generator torque signal causes the generator to operate at a rotational speed which produces a generator output power level within the acceptable range of output power levels, and which produces a desired water current turbine loading condition.

2. A method as claimed in claim 1, wherein the generator torque level indicated by the torque control signal is determined according to the equation $Q = P/\omega$, where Q is the required generator torque, P is a desired generator output power level within the acceptable range of power levels, and $\omega$ is the rotational speed of the generator.

3. A method as claimed in claim 1 or 2, wherein producing the generator torque control signal comprises:

   determining an acceptable range of generator torque levels for the rotational speed of the generator indicated by the speed signal, the acceptable range of torque levels resulting in a generator output power level within the acceptable range of output power levels at the speed concerned;
   determining a desired torque level within the acceptable range of torque levels, in dependence upon the determined loading characteristics for the rotational speed concerned;
   producing a generator torque control signal relating to the desired torque level.

4. A method as claimed in any one of the preceding claims, wherein the generator torque control signal serves to cause the generator to operate at a rotational speed outside of a predetermined range of rotational speeds.

5. A method as claimed in any one of the preceding claims, wherein the desired water current turbine loading condition is a minimum loading condition at the rotational speed concerned.

6. A method as claimed in any one of the preceding claims, wherein the torque control signal remains substantially constant as rotational speed of the generator changes until the power output level of the generator is within a predetermined amount of the upper or lower output power levels of the acceptable range of output power levels.

7. A controller for a water current turbine which includes a rotor assembly arranged to drive a generator, the controller comprising a control processor operable to:

   store loading data indicative of predetermined loading characteristics for the water current turbine over a range of generator rotational speed and torque combinations;
   store power range data indicative of a predetermined acceptable range of output power levels with respect to a desired generator output level, the acceptable range of output power levels being defined by a desired power quality measure;
   receive a power signal indicative of a desired generator output power level;
   receive a speed signal indicative of a rotational speed of the generator of the turbine;
   produce a generator torque control signal in dependence upon such a received speed signal, such a predetermined acceptable range of output power levels indicated by such stored power range data, and such predetermined loading characteristics of the water current turbine indicated by such stored loading data; and
supply such a generator torque control signal to a generator,

wherein the generator torque signal serves to cause the generator to operate at a rotational speed which produces a generator output power level within the acceptable range of output power levels, and which produces a desired water current turbine loading condition.

8. A controller as claimed in claim 7, wherein the generator torque level indicated by the torque control signal is determined according to the equation $Q=P/\omega$, where Q is the required generator torque, P is a desired generator output power level within the acceptable range of power levels, and $\omega$ is the rotational speed of the generator.

9. A controller as claimed in claim 7 or 8, wherein the controller is operable to:

store torque range data indicative of a predetermined acceptable range of generator torque levels for the rotational speed of the generator indicated by the speed signal, the acceptable range of torque levels resulting in a generator output power level within the acceptable range of output power levels at the speed concerned;
determine a desired torque level within the acceptable range of torque levels indicated by such stored torque range data, in dependence upon predetermined load conditions indicated by the stored loading data for the rotational speed concerned;
produce a generator torque control signal relating to the desired torque level.

10. A controller as claimed in any one of claims 7 to 9, wherein the generator torque control signal serves to cause the generator to operate at a rotational speed outside of a predetermined range of rotational speeds.

11. A controller as claimed in any one of claims 7 to 10, wherein the desired water current turbine loading condition is a minimum loading condition at the rotational speed concerned.

12. A controller as claimed in any one of claims 7 to 11, operable to maintain the torque control signal at a substantially constant level as rotational speed of the generator changes until the power output level of the generator is within a predetermined amount of the upper or lower output power levels of the acceptable range of output power levels.

13. A water current turbine including a generator, a rotor assembly arranged to drive the generator, and a controller as claimed in any one of claims 7 to 12, the controller being operable to control the generator.

**Patentansprüche**

1. Verfahren zur Regelung einer Wasserturbine, die eine Rotorvorrichtung aufweist, die zum Antrieb eines Generators angeordnet ist, wobei das Verfahren Folgendes umfasst:

Festlegen von Lastmerkmalen für die Wasserturbine über einen Bereich der Generatordrehzahl- und Drehmomentkombinationen;
Empfangen eines Leistungssignals, das einen gewünschten Generatorausgangs-Leistungspegel anzeigt;
Festlegen eines zulässigen Bereichs der Ausgangsleistungspegel bezüglich des gewünschten Generatorausgangspegels, wobei der zulässige Bereich der Ausgangsleistungspegel durch eine gewünschte Leistungsqualitätsmaßnahme definiert ist;
Empfangen eines Drehzahlsignals, das eine Drehzahl des Generators anzeigt;
Erzeugen eines Generatordrehmoment-Steuersignals in Abhängigkeit von dem Drehzahlsignal, dem zulässigen Bereich der Ausgangsleistungspegel und den festgelegten Lastmerkmalen der Wasserturbine; und
Liefern des Generatordrehmoment-Steuersignals an den Generator,
wobei das Generatordrehmomentsignal bewirkt, dass der Generator mit einer Drehzahl betrieben wird, die einen Generatorausgangs-Leistungspegel in dem zulässigen Bereich der Ausgangsleistungspegel erzeugt und die eine gewünschte Wasserturbinen-Lastbedingung erzeugt.

2. Verfahren gemäß Anspruch 1, wobei der Generatordrehmomentpegel, der durch das Drehmomentsteuersignal angezeigt wird, gemäß der Gleichung $Q=P/\omega$ bestimmt wird, wobei Q das erforderliche Generatordrehmoment, P ein gewünschter Generatorausgangs-Leistungspegel innerhalb des zulässigen Bereichs von Leistungspegeln und $\omega$ die Drehzahl des Generators ist.

3. Verfahren gemäß Anspruch 1 oder Anspruch 2, wobei die Erzeugung des Generatordrehmoment-Steuersignals Folgendes umfasst:

Festlegen eines zulässigen Bereichs der Generatordrehzahlpegel für die durch das Drehzahlsignal angegebene Drehzahl des Generators, wobei der zulässige Bereich der Drehmomentpegel zu einem Generatorausgangs-Leistungspegel in dem zulässigen Bereich der Ausgangsleistungspegel mit der entsprechenden Drehzahl führt;
Festlegen eines gewünschten Drehmomentpegels in dem zulässigen Bereich der Drehzahlpegel in Abhängigkeit von den festgelegten Lastmerkmalen für die entsprechende Drehzahl;
Erzeugen eines Generatordrehmoment-Steuersignals, das sich auf den gewünschten Drehmomentpegel bezieht.

4. Verfahren gemäß einem der vorhergehenden Ansprüche, wobei das Generatordrehmoment-Steuersignal bewirkt, dass der Generator mit einer Drehzahl außerhalb eines vorbestimmten Drehzahlbereichs betrieben wird.

5. Verfahren gemäß einem der vorhergehenden Ansprüche, wobei die gewünschte Wasserturbinen-Lastbedingung eine Minimallastbedingung bei der entsprechenden Drehzahl ist.

6. Verfahren gemäß einem der vorhergehenden Ansprüche, wobei das Drehmomentsteuersignal im Wesentlichen konstant bleibt, wenn sich die Drehzahl des Generators ändert, bis sich der Leistungsausgangspegel des Generators innerhalb einer vorbestimmten Höhe der oberen oder unteren Ausgangsleistungspegel des zulässigen Ausgangsleistungspegel-Bereichs befindet.

7. Steuereinrichtung für eine Wasserturbine, die eine Rotorvorrichtung aufweist, die zum Antrieb eines Generators angeordnet ist, wobei die Steuereinrichtung einen Steuerprozessor aufweist, der zu Folgendem betrieben werden kann:

Speichern von Lastdaten, die vorbestimmte Lastmerkmale für die Wasserturbine über einen Bereich von Generatordrehzahl- und Drehmomentkombinationen anzeigen;
Speichern von Leistungsbereichsdaten, die einen vorbestimmten zulässigen Ausgangsleistungspegel-Bereich bezüglich eines gewünschten Generatorausgangspegels anzeigen, wobei der zulässige Ausgangsleistungspegel-Bereich durch eine gewünschte Leistungsqualitätsmaßnahme definiert ist;
Empfangen eines Leistungssignals, das einen gewünschten Generatorausgangs-Leistungspegel anzeigt;
Empfangen eines Drehzahlsignals, das eine Drehzahl des Generators der Turbine anzeigt;

Erzeugen eines Generatordrehmoment-Steuersignals in Abhängigkeit von solch einem empfangenen Drehzahlsignal, solch einem vorbestimmten zulässigen Bereich von Ausgangsleistungspegeln, die von solchen gespeicherten Leistungsbereichsdaten angezeigt werden, und solch vorbestimmten Lastmerkmalen der Wasserturbine, die von solchen gespeicherten Lastdaten angezeigt sind; und
Liefern eines solchen Generatordrehmoment-Steuersignals an den Generator, wobei das Generatordrehmomentsignal bewirkt, dass der Generator mit einer Drehzahl betrieben wird, die einen Generatorausgangs-Leistungspegel in dem zulässigen Bereich der Ausgangsleistungspegel erzeugt und die eine gewünschte Wasserturbinen-Lastbedingung erzeugt.

8. Steuereinrichtung gemäß Anspruch 7, wobei der Generatordrehmomentpegel, der durch das Drehmomentsteuersignal angezeigt wird, gemäß der Gleichung $Q=P/\omega$ bestimmt wird, wobei $Q$ das erforderliche Generatordrehmoment, $P$ ein gewünschter Generatorausgangs-Leistungspegel innerhalb des zulässigen Bereichs von Leistungspegeln und $\omega$ die Drehzahl des Generators ist.

9. Steuereinrichtung gemäß Anspruch 7 oder 8, wobei die Steuereinrichtung für Folgendes betrieben werden kann:

Speichern von Drehmomentbereichsdaten, die einen vorbestimmten zulässigen Bereich von Generatordrehmomentpegeln für die Drehgeschwindigkeit des Generators, die von dem Drehzahlsignal angezeigt werden, anzeigen, wobei der zulässige Bereich der Drehmomentpegel zu einem Generatorausgangs-Leistungspegel in dem zulässigen Bereich der Ausgangsleistungspegel bei der entsprechenden Drehzahl führt;
Festlegen eines gewünschten Drehmomentpegels in dem zulässigen Bereich der Drehmomentpegel, die durch solche gespeicherten Drehmomentbereichsdaten angezeigt sind, in Abhängigkeit von den festgelegten Lastbedingungen, die durch die gespeicherten Lastdaten für die entsprechende Drehzahl angezeigt sind;
Erzeugen eines Generatordrehmoment-Steuersignals, das sich auf den gewünschten Drehmomentpegel bezieht.

10. Steuereinrichtung gemäß einem der Ansprüche 7 bis 9, wobei das Generatordrehmoment-Steuersignal bewirkt, dass der Generator mit einer Drehzahl außerhalb eines vorbestimmten Bereichs an Drehzahlen betrieben wird.

**11.** Steuereinrichtung gemäß einem der Ansprüche 7 bis 10, wobei die gewünschte Wasserturbinen-Lastbedingung eine Minimallastbedingung bei der entsprechenden Drehzahl ist.

**12.** Steuereinrichtung gemäß einem der Ansprüche 7 bis 11, die betreibbar ist, um das Drehmomentsteuersignal auf einem im Wesentlichen konstanten Pegel zu halten, wenn sich die Drehzahl des Generators ändert, bis sich der Leistungsausgangspegel des Generators innerhalb einer vorbestimmten Höhe der oberen oder unteren Ausgangsleistungspegel des zulässigen Ausgangsleistungspegel-Bereichs befindet.

**13.** Wasserturbine mit einem Generator, einer Rotorvorrichtung, die zum Antrieb des Generators angeordnet ist, und einer Steuereinrichtung gemäß einem der Ansprüche 7 bis 12, wobei die Steuereinrichtung zur Steuerung des Generators betrieben werden kann.


**Revendications**

**1.** Procédé de commande d'une hydrolienne qui inclut un ensemble de rotor agencé de façon à entraîner un générateur, le procédé comprenant :

la détermination de caractéristiques de charge pour l'hydrolienne sur une plage de combinaisons de vitesse de rotation et de couple de générateur ;
la réception d'un signal de puissance indicateur d'un niveau désiré de puissance de sortie de générateur ;
la détermination d'une plage acceptable de niveaux de puissance de sortie par rapport au niveau désiré de sortie de générateur, la plage acceptable de niveaux de puissance de sortie étant définie par une mesure de qualité désirée de puissance ;
la réception d'un signal de vitesse indicateur d'une vitesse de rotation du générateur ;
la production d'un signal de commande de couple de générateur en fonction du signal de vitesse, de la plage acceptable de niveaux de puissance de sortie et des caractéristiques de charge déterminées de l'hydrolienne ; et
la délivrance du signal de commande de couple de générateur au générateur,
dans lequel le signal de couple de générateur fait que le générateur fonctionne à une vitesse de rotation qui produit un niveau de puissance de sortie de générateur à l'intérieur de la plage acceptable de niveaux de puissance de sortie, et qui produit une condition de charge désirée d'hydrolienne.

**2.** Procédé selon la revendication 1, dans lequel le niveau de couple de générateur indiqué par le signal de commande de couple est déterminé conformément à l'équation $Q = P/\omega$, où $Q$ est le couple de générateur requis, $P$ est un niveau désiré de puissance de sortie de générateur à l'intérieur de la plage acceptable de niveaux de puissance, et $\omega$ est la vitesse de rotation du générateur.

**3.** Procédé selon la revendication 1 ou 2, dans lequel la production du signal de commande de couple de générateur comprend :

la détermination d'une plage acceptable de niveaux de couple de générateur pour la vitesse de rotation du générateur indiquée par le signal de vitesse, la plage acceptable de niveaux de couple résultant en un niveau de puissance de sortie de générateur à l'intérieur de la plage acceptable de niveaux de puissance de sortie à la vitesse concernée ;
la détermination d'un niveau désiré de couple à l'intérieur de la plage acceptable de niveaux de couple, en fonction des caractéristiques de charge déterminées pour la vitesse de rotation concernée ;
la production d'un signal de commande de couple de générateur se rapportant au niveau désiré de couple.

**4.** Procédé selon l'une quelconque des revendications précédentes, dans lequel le signal de commande de couple de générateur sert à faire en sorte que le générateur fonctionne à une vitesse de rotation à l'extérieur d'une plage prédéterminée de vitesses de rotation.

**5.** Procédé selon l'une quelconque des revendications précédentes, dans lequel la condition de charge désirée d'hydrolienne est une condition de charge minimum à la vitesse de rotation concernée.

**6.** Procédé selon l'une quelconque des revendications précédentes, dans lequel le signal de commande de couple reste sensiblement constant lorsque la vitesse de rotation du générateur change jusqu'à ce que le niveau de sortie de puissance du générateur soit à l'intérieur d'une quantité prédéterminée des niveaux de puissance de sortie supérieur ou inférieur de la plage acceptable de niveaux de puissance de sortie.

**7.** Contrôleur pour une hydrolienne qui inclut un ensemble de rotor pour entraîner un générateur, le contrôleur comprenant un processeur de commande utilisable pour :

stocker des données de charge indicatrices de caractéristiques de charge prédéterminées pour l'hydrolienne sur une plage de combinaisons de vitesse de rotation et de couple de générateur ;

stocker des données de plage de puissance indicatrices d'une plage acceptable prédéterminée de niveaux de puissance de sortie par rapport à un niveau désiré de sortie de générateur, la plage acceptable de niveaux de puissance de sortie étant définie par une mesure de qualité désirée de puissance ;

recevoir un signal de puissance indicateur d'un niveau désiré de puissance de sortie de générateur ;

recevoir un signal de vitesse indicateur d'une vitesse de rotation du générateur de l'hydrolienne ;

produire un signal de commande de couple de générateur en fonction d'un tel signal de vitesse reçu, d'une telle plage acceptable prédéterminée de niveaux de puissance de sortie indiquée par de telles données de plage de puissance stockées, et de telles caractéristiques de charge prédéterminées de l'hydrolienne indiquée par de telles données de charge stockées ; et délivrer un tel signal de commande de couple de générateur à un générateur,

dans lequel le signal de couple de générateur sert à faire en sorte que le générateur fonctionne à une vitesse de rotation qui produit un niveau de puissance de sortie de générateur à l'intérieur de la plage acceptable de niveaux de puissance de sortie, et qui produit une condition de charge désirée d'hydrolienne.

8. Contrôleur selon la revendication 7, dans lequel le niveau de couple de générateur indiqué par le signal de commande de couple est déterminé conformément à l'équation $Q = P/\omega$, où $Q$ est le couple de générateur requis, $P$ est un niveau désiré de puissance de sortie de générateur à l'intérieur de la plage acceptable de niveaux de puissance, et $\omega$ est la vitesse de rotation du générateur.

9. Contrôleur selon la revendication 7 ou 8, dans lequel le contrôleur est utilisable pour :

stocker des données de plage de couple indicatrices d'une plage acceptable prédéterminée de niveaux de couple de générateur pour la vitesse de rotation du générateur indiquée par le signal de vitesse, la plage acceptable de niveaux de couple résultant en un niveau de puissance de sortie de générateur à l'intérieur de la plage acceptable de niveaux de puissance de sortie à la vitesse concernée ;

déterminer un niveau désiré de couple à l'intérieur de la plage acceptable de niveaux de couple indiquée par de telles données de plage de couple stockées, en fonction de conditions de charge prédéterminées indiquées par les données de charge stockées pour la vitesse de rotation concernée ;

produire un signal de commande de couple de générateur se rapportant au niveau désiré de couple.

10. Contrôleur selon l'une quelconque des revendications 7 à 9, dans lequel le signal de commande de couple de générateur sert à faire en sorte que le générateur fonctionne à une vitesse de rotation à l'extérieur d'une plage prédéterminée de vitesses de rotation.

11. Contrôleur selon l'une quelconque des revendications 7 à 10, dans lequel la condition de charge désirée d'hydrolienne est une condition de charge minimum à la vitesse de rotation concernée.

12. Contrôleur selon l'une quelconque des revendications 7 à 11, utilisable pour maintenir le signal de commande de couple à un niveau sensiblement constant lorsque la vitesse de rotation du générateur change jusqu'à ce que le niveau de sortie de puissance du générateur soit à l'intérieur d'une quantité prédéterminée des niveaux de puissance de sortie supérieur ou inférieur de la plage acceptable de niveaux de puissance de sortie.

13. Hydrolienne incluant un générateur, un ensemble de rotor pour entraîner le générateur, et un contrôleur selon l'une quelconque des revendications 7 à 12, le contrôleur étant utilisable pour commander le générateur.

FIGURE 1

EP 2 776 708 B1

FIGURE 2

101 Determine loading conditions

102 Determine acceptable power range

103 Receive power signal

104 Receive speed signal

105 Produce torque control signal

106 Supply torque control signal

Figure 3

Figure 4

Figure 5

Figure 6

Figure 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100109325 A
- EP 0739087 A2
- GB 2010052156 W
- WO 2011077128 A